# EUROPÄISCHE PATENTSCHRIFT

(11) **EP 3 995 721 B1**
(45) Veröffentlichungstag und Bekanntmachung des Hinweises auf die Patenterteilung: **01.04.2026**
(21) Anmeldenummer: 21204514.0
(22) Anmeldetag: 25.10.2021
(51) Int. Cl.: F16H 61/4078, F16H 61/46, A01C 19/02

(54) **HYDRAULIKANLAGE FÜR EINE LANDWIRTSCHAFTLICHE VERTEILMASCHINE**
HYDRAULIC SYSTEM FOR AN AGRICULTURAL DISTRIBUTION MACHINE
INSTALLATION HYDRAULIQUE POUR UNE MACHINE D'ÉPANDAGE AGRICOLE

(30) Priorität: 04.11.2020 DE 102020128996
(43) Veröffentlichungstag der Anmeldung: 11.05.2022
(73) Patentinhaber: Horsch Maschinen GmbH, 92421 Schwandorf (DE)
(72) Erfinder: PRÜLL, Thomas, 92421 Schwandorf (DE)
(74) Vertreter: v. Bezold & Partner Patentanwälte - PartG mbB

(56) Entgegenhaltungen:
- DE-A1- 3 513 739
- US-A- 4 767 062
- US-B2- 8 230 954

## Beschreibung

Die Erfindung betrifft eine Hydraulikanlage für eine landwirtschaftliche Verteilmaschine, insbesondere eine pneumatische Sämaschine und/oder einen pneumatischen Düngerstreuer.

DE 3 513 739 A1 offenbart eine Vorrichtung bestehend aus einem Fahrzeug, z. B. einem Schlepper, mit einer Zapfwelle und einem aufgesattelten oder angehängten Streuaggregat, das einen Vorratsbehälter mit Auslauföffnungen, darunter angeordnete Dosierorgane sowie mehrere an diese mit Einlauföffnungen anschließende, zu beiden Seiten und senkrecht zu der Fahrzeuglängsachse sich erstreckende, an ein Fördergebläse angeschlossene Streuleitungen aufweist, die in unterschiedlichem Abstand von der Fahrzeuglängsachse an Streuöffnungen mit Verteilerorganen enden. Zur Reduzierung des antriebstechnischen und des Wartungsaufwandes sowie zur Gewichtsreduzierung gegenüber einem von der Zapfwelle abgeleiteten mechanischen Antrieb ist ein unmittelbar auf der Gebläseachse sitzender Hydraulikmotor vorgesehen, der an ein bordeigenes Hydrauliksystem des Fahrzeugs oder an eine an die Zapfwelle des Fahrzeugs angekuppelte Hydraulikpumpe angeschlossen ist. Zum Stand der Technik kann ferner auf die US 4 767 062 A und die US 8 230 954 B2 verwiesen werden.

Zum Fördern von landwirtschaftlichem Verteilgut werden in landwirtschaftlichen Verteilmaschinen, insbesondere in pneumatischen Sämaschinen und/oder pneumatischen Düngerstreuern jeweils Gebläse eingesetzt. Mittels derartiger Gebläse wird in einem Leitungssystem jeweils ein Luftvolumenstrom zum Fördern des Verteilgut erzeugt.

Derartige Gebläse werden in der Regel mittels Hydraulikantrieben angetrieben. Wobei die Hydraulikantriebe jeweils große Antriebsleistungen, d.h. große Mengen an Fluid (z.B. Hydrauliköl) benötigen, welche in der Regel mittels einer Zugmaschine bereitgestellt werden. Jedoch verfügen ältere und kleinere Zugmaschinen (z.B. Traktoren) oftmals nicht über eine geeignete Menge an Fluid, weshalb häufig sog. Zapfwellenantriebe eingesetzt werden. Bei derartigen Antrieben wird eine Pumpe an eine Antriebswelle einer Zugmaschine angekoppelt und somit angetrieben. Um eine ausreichende Menge an Fluid zur Verfügung zu haben, sind an der Verteilmaschine zudem Hydrauliktanks zum Mitführen und Bevorraten von Fluid vorgesehen.

Derartige Hydrauliktanks benötigen jedoch viel Bauraum. Darüber hinaus kann sich im Hydrauliktank Schmutz ablagern, weshalb diese zudem mit einem Rücklauffilter ausgestattet werden müssen. Derartige Rücklauffilter müssen jedoch wiederum regelmäßig getauscht werden. Auch muss das Fluid regelmäßig durch neues ersetzt werden.

Die aus dem Stand der Technik bekannten Systeme zum Antreiben eines Hydraulikantriebes auch mit älteren und kleineren Zugmaschinen sind deshalb nicht ausreichend zufriedenstellend.

Aufgabe der Erfindung ist es somit, die beschriebenen Nachteile des Standes der Technik zu beseitigen. Insbesondere soll eine landwirtschaftliche Verteilmaschine mit einem Hydraulikantrieb geschaffen werden, welche auch mit älteren und geringeren Mengen an fluid mitführenden Zugmaschinen betrieben werden kann.

Diese Aufgaben werden gelöst durch eine Hydraulikanlage mit den Merkmalen des unabhängigen Anspruchs 1. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft eine Hydraulikanlage für eine landwirtschaftliche Verteilmaschine, insbesondere pneumatische Sämaschine und/oder pneumatischer Düngerstreuer.

Die Hydraulikanlage umfasst wenigstens eine erste Pumpe, welche eingerichtet ist, mittels einer Antriebswelle einer Zugmaschine (z.B. Traktor) antriebstechnisch gekoppelt und mittels dieser angetrieben zu werden. Die erste Pumpe kann bspw. zweckmäßig eine Aufsteckpumpe sein, und die Antriebswelle kann bspw. ein Zapfwellenstummel (z.B. Gelenkwellenstummel) der Zugmaschine sein.

Die Hydraulikanlage umfasst darüber hinaus wenigstens einen Hydraulikantrieb, welcher eingerichtet ist, ein Gebläse (z.B. Radialgebläse, Zentrifugalgebläse oder dergl.) in Abhängigkeit eines erhaltenen Volumenstrom eines Fluid, mit einer steuer- und/oder regelbaren Drehzahl anzutreiben.

Um eine landwirtschaftliche Verteilmaschine mit einem Hydraulikantrieb zu schaffen, welche auch mit älteren und geringeren Mengen an Fluid mitführenden Zugmaschinen betrieben werden kann ist erfindungsgemäß vorgesehen, dass die erste Pumpe und der Hydraulikantrieb mittels eines Leitungssystems einen, vorzugsweise geschlossenen, Zirkulationskreislauf (z.B. in Form einer Reihenschaltung, Reihenanordnung, Ringleitungsanordnung) bilden und die erste Pumpe eingerichtet ist, dass Fluid entlang des Zirkulationskreislauf zu fördern (z.B. zirkulieren).

Insbesondere kann erfindungsgemäß vorgesehen sein, dass mittels der ersten Pumpe zweckmäßig dauerhaft zumindest ein wesentlicher Teil des Fluid entlang des, vorzugsweise geschlossenen, Zirkulationskreislauf gefördert wird.

Die Erfindung macht sich die Erkenntnis zu Nutze, dass durch das Fördern des Fluid entlang eines Zirkulationskreislauf die benötigte Menge an Fluid wesentlich verringert werden kann und somit kein zusätzlicher Behälter für Fluid an der Verteilmaschine benötigt wird und somit auch ältere und kleinere Zugmaschinen zum Antrieben der Verteilmaschine, insbesondere eines Gebläse der Verteilmaschine eingesetzt werden können.

Im Kontext der Erfindung umfasst die Definition einer pneumatischen Sämaschine und/oder eines pneumatischen Düngerstreuer insbesondere derartige Verteilmaschinen, bei welchen vorzugsweise granulares Verteilgut (z.B. Saatgut, Dünger oder dergl.) mittels eines Luftvolumenstrom in oder entlang von Transportleitungen gefördert und transportiert wird.

Gemäß einer bevorzugten Weiterbildung der Erfindung ist es möglich, dass im Zirkulationskreislauf eine definierte und/oder definierbare Menge an Fluid durch Fördern mittels der ersten Pumpe zirkuliert, vorzugsweise dauerhaft zirkuliert. Wobei eine Definition bspw. durch entsprechende Ventile erfolgen kann. Eine definierte Menge kann insbesondere eine definierte und/oder definierbare Mindestmenge umfassen.

Der Hydraulikantrieb kann zweckmäßig ein insbesondere hydraulisch betriebener Motor sein.

Eine bevorzugte Ausführungsvariante der Erfindung kann vorsehen, dass das Leitungssystem durch wenigstens eine Verbindungsleitung gebildet ist, welche mit der ersten Pumpe einerseits und mit dem Hydraulikantrieb andererseits gekoppelt ist.

Alternativ oder ergänzend kann das Leitungssystem durch wenigstens eine Rückleitung gebildet sein, welche mit dem Hydraulikantrieb einerseits und mit der ersten Pumpe und/oder einer Zuleitung andererseits gekoppelt ist.

Alternativ oder ergänzend kann das Leitungssystem durch wenigstens eine Zuleitung gebildet sein, welche zumindest mit der ersten Pumpe gekoppelt ist.

Eine Koppelung kann im Kontext der Erfindung insbesondere eine wirktechnische (z.B. fluidisch), mittelbare oder unmittelbare, Verbindung umfassen und beinhalten.

Als Leitungen (z.B. Verbindungsleitung, Rückleitung, Zuleitung) des Leitungssystem können im vorliegenden insbesondere Schlauchleitungen wie bspw. Hydraulikleitungen und/oder dergl. eingesetzt werden, welche auch mehrgeteilt sein können und aus mehreren Einzelleitungen zusammengesetzt sein können. Ebenso können den Leitungen in deren Verlauf Ventile, Verschraubungen, Schnittstellen und/oder dergl. zugeordnet sein.

Um keinen zusätzlichen Behälter und keine Zugmaschine mit einer großen Menge an Fluid (z.B. Hydrauliköl) zu benötigen und dennoch Verunreinigungen im Zirkulationskreislauf zu vermeiden, kann gemäß einer bevorzugten Ausführungsvariante vorgesehen sein, dass der Zirkulationskreislauf mit einer Zuleitung und/oder mit einer Koppelleitung gekoppelt ist, wobei mittels der Zuleitung eine definierte und/oder definierbare Zuführmenge an Fluid dem Zirkulationskreislauf zuführbar ist, und/oder mittels der Koppelleitung eine definierte und/oder definierbare Rückführmenge an Fluid aus dem Zirkulationskreislauf abführbar ist. Wobei es optional oder zusätzlich möglich ist, dass die Zuführmenge und die Rückführmenge zumindest weitgehend gleich sind und/oder die Zuführmenge und/oder die Rückführmenge jeweils geringer sind als eine Gesamtmenge des im Zirkulationskreislauf zirkulierenden Fluid.

Gemäß einer Ausführungsvariante der Erfindung kann vorgesehen sein, dass die Zuleitung und/oder die Koppelleitung mit der Verbindungsleitung (z.B. zwischen Pumpe und Hydraulikantrieb) gekoppelt ist und somit die Zuführung an Fluid in den Zirkulationskreislauf mittels der Verbindungsleitung erfolgt. Wobei eine Koppelung der Verbindungsleitung mit der Zuleitung und/oder Koppelleitung vorzugsweise mittels einer Abzweigung (z.B. gebildet durch eine oder mehrere Verschraubungen, Ventile und/oder dergl.) in der Verbindungsleitung erfolgen kann.

Insbesondere ist es möglich, dass der Zirkulationskreislauf, vorzugsweise die Verbindungsleitung, mit einer Zuleitung und/oder mit einer Koppelleitung gekoppelt ist, wobei mittels der Zuleitung eine definierte und/oder definierbare Zuführmenge an Fluid dem Zirkulationskreislauf zuführbar ist, und/oder mittels der Koppelleitung eine definierte und/oder definierbare Rückführmenge an Fluid aus dem Zirkulationskreislauf abführbar ist. Wobei es somit auch denkbar ist, den zumindest einen Hydraulikantrieb auf Basis der zugeführten Menge an Fluid zu steuern.

Somit ist es zweckmäßig auch möglich, dass mit der ersten Pumpe eine im Wesentlichen dauerhaft konstante Antriebsleistung des Hydraulikantrieb (oder der mehreren Hydraulikantriebe) erreicht wird und bei einer Erhöhung der Antriebsleistung des Hydraulikantrieb eine zugeführte Menge an Fluid erhöht wird. Wobei dies bspw. auch mit einem Load-Sensing-System erreicht werden kann, bzw. erfolgen kann.

Das Leitungssystem weist eine Zuleitung auf, welche mit der ersten Pumpe einerseits gekoppelt ist und welche eingerichtet ist, mit einer Ölversorgungsanlage einer Zugmaschine (z.B. Traktor) andererseits gekoppelt zu werden, vorzugsweise mit einem Versorgungsanschluss der Ölversorgungsanlage einer Zugmaschine gekoppelt zu werden.

Im Kontext der Erfindung, insbesondere während des Betriebs der Hydraulikanlage, ist mittels der Zuleitung eine definierte und/oder definierbare Zuführmenge an Fluid dem Zirkulationskreislauf zuführbar, insbesondere ist eine Teilmenge an Fluid der Gesamtmenge des im Zirkulationskreislauf zirkulierenden Fluid zuführbar, wobei die Teilmenge vorzugsweise geringer ist als die Gesamtmenge des im Zirkulationskreislauf zirkulierenden Fluid.

Zur Definition der Zuführmenge ist der Zuleitung ein Druckregelventil zugeordnet, wobei alternativ oder ergänzend zur Definition der Zuführmenge, der Zuleitung eine Blende zugeordnet ist sowie mit der Zuleitung und einer Koppelleitung ein zweites Ventil gekoppelt ist, wobei das zweite Ventil ein Druckbegrenzungsventil, ein Druckregelventil und/oder ein Stromregelventil ist, wobei alternativ oder ergänzend zur Definition der Zuführmenge, der Zuleitung eine zweite Pumpe zugeordnet ist.

Eine bevorzugte Ausführungsvariante der Erfindung kann vorsehen, dass das Leitungssystem eine Koppelleitung aufweist, welche mittels einer Abzweigung mit der Rückleitung einerseits gekoppelt ist und welche eingerichtet ist, mit einer Ölversorgungsanlage einer Zugmaschine andererseits gekoppelt zu werden, vorzugsweise mit einem Rücklaufanschluss der Ölversorgungsanlage einer Zugmaschine gekoppelt zu werden. Auch eine Koppelung mit einem sog. Load-Sensing-System, respektive einem LS-Block wäre denkbar.

Es ist möglich, insbesondere währende des Betriebs der Hydraulikanlage, dass mittels der Koppelleitung eine definierte und/oder definierbare Rückführmenge an Fluid aus dem Zirkulationskreislauf abführbar ist, insbesondere eine Teilmenge an Fluid der Gesamtmenge des im Zirkulationskreislauf zirkulierdenen fluid abführbar (z.B. entnehmbar) ist. Wobei die Teilmenge vorzugsweise geringer ist als die Gesamtmenge des im Zirkulationskreislauf zirkulierenden Fluid. Wodurch somit ein Teil des Fluid dauerhaft entlang des vorzugsweise geschlossenen Zirkulationskreislauf gefördert wird.

Zur Definition der Rückführmenge ist es möglich, dass der Koppelleitung und/oder der Rückleitung ein Rückschlagventil zugeordnet ist. Welche Rückschlagventile mit unterschiedlichen Drücken voreingestellt und/oder voreinstellbar sein können.

Alternativ oder ergänzend ist es möglich, dass zur Definition der Rückführmenge, der Koppelleitung ein drittes Ventil zugeordnet ist. Wobei das dritte Ventil bspw. ein Stromregelventil und/oder eine Blende und/oder eine Drossel ist.

Zum Steuern und/oder Regeln der Drehzahl des Hydraulikantrieb kann gemäß einer Weiterbildung der Erfindung vorgesehen sein, dass das Leitungssystem eine Verbindungsleitung aufweist, welche mit der ersten Pumpe einerseits und mit dem Hydraulikantrieb andererseits gekoppelt ist, wobei die Verbindungsleitung mehrgeteilt ist und dieser ein, einen Volumenstrom beeinflussendes, erstes Ventil zugeordnet ist, wobei das erste Ventil eingerichtet ist, eine mittels der Verbindungsleitung bereitgestellte Menge an Fluid zu steuern- und/oder zu regeln, wobei ein steuern und/oder regeln manuell und/oder elektro-proportional erfolgen kann.

Dem ersten Ventil kann eine Ventilleitung zugeordnet sein welche mit dem ersten Ventil einerseits und mit dem Leitungssystem, insbesondere der Rückleitung, andererseits gekoppelt ist. Somit kann vom Hydraulikantrieb nicht benötigtes Fluid wieder dem Zirkulationskreislauf rückgeführt werden.

Das erste Ventil kann bspw. ein Stromregelventil sein.

Gemäß einer alternativen oder ergänzenden Ausführungsvariante kann das erste Ventil bspw. ein Mengenteiler, Stromteiler und/oder dergl. sein. Das erste Ventil kann hierbei bspw. mit der Pumpe einerseits und mit zumindest zwei Hydraulikantrieben andererseits gekoppelt sein. Das erste Ventil, das heißt der Mengenteiler, Stromteiler und/oder dergl., kann hierbei zudem eingerichtet sein, dass die zwei Hydraulikantriebe somit definiert zumindest weitgehend identisch und/oder definiert unterschiedlich angesteuert werden, respektive mit Fluid versorgt werden. Zweckmäßig ist es somit möglich, dass das erste Ventil eingerichtet ist, eine Menge an Fluid auf zumindest zwei Hydraulikantriebe aufzuteilen, vorzugsweise zumindest weitgehend identisch aufzuteilen und/oder definiert unterschiedlich aufzuteilen.

Gemäß einer bevorzugten Weiterbildung der Erfindung ist es möglich, dass zum Steuern und/oder Regeln der Drehzahl des Hydraulikantrieb das Leitungssystem eine Verbindungsleitung aufweist, welche mit der ersten Pumpe einerseits und mit dem Hydraulikantrieb andererseits gekoppelt ist, wobei die erste Pumpe eine Verstellpumpe mit einer veränderbaren Antriebsdrehzahl ist, welche eingerichtet ist, Anhand einer Antriebsdrehzahl eine bereitgestellte Menge an Fluid zu definieren und somit einen Volumenstrom für den Hydraulikantrieb zu steuern- und/oder zu regeln, wobei ein Steuern und/oder Regeln manuell und/oder elektro-proportional erfolgen kann.

Um Beschädigungen der Pumpe und/oder des Hydraulikantriebs bspw. durch sog. Leckageöl zu vermeiden, kann gemäß einer Weiterbildung der Erfindung vorgesehen sein, dass das Leitungssystem zumindest eine Niederdruckleitung umfasst, welche mit der ersten Pumpe und/oder mit dem Hydraulikantrieb einerseits gekoppelt ist und eingerichtet ist, mit einem Drucklosanschluss einer Ölversorgungsanlage einer Zugmaschine gekoppelt zu werden. Auch eine Koppelung mit einem sog. Load-Sensing-System, respektive einem LS-Block wäre denkbar.

Zur Kühlung des Fluid kann dem Leitungssystem ein Kühler zugeordnet sein, welcher zur Kühlung des Fluid eingerichtet ist. Insbesondere kann der Rückleitung ein Kühler zugeordnet sein und/oder der Zuleitung ein Kühler zugeordnet sein.

Es ist möglich, dass die Hydraulikanlage wenigstens zwei oder mehr Hydraulikantriebe zugeordnet sind, welche Bestandteil des Zirkulationskreislauf sein können.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:

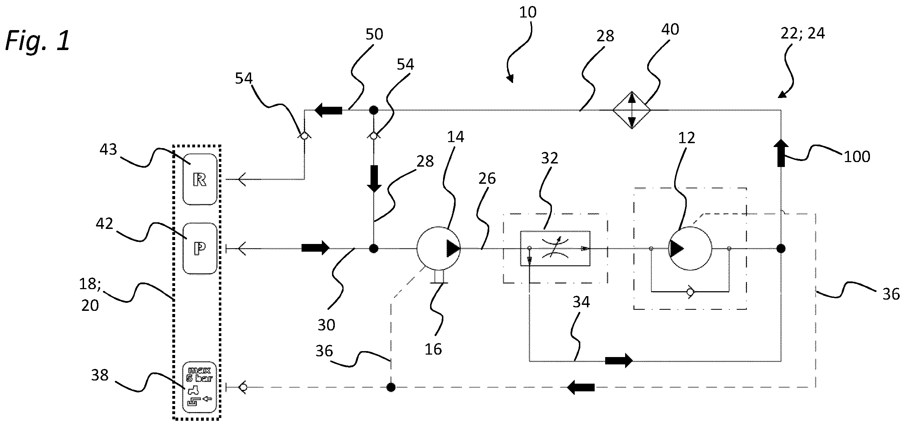

Figur 1 eine Ausführungsvariante einer Hydraulikanlage mit einer ersten Pumpe und einem Hydraulikantrieb, welche mittels eines Leitungssystem einen geschlossenen Zirkulationskreislauf bilden, welcher mit einer Ölversorgungsanlage einer Zugmaschine gekoppelt ist,

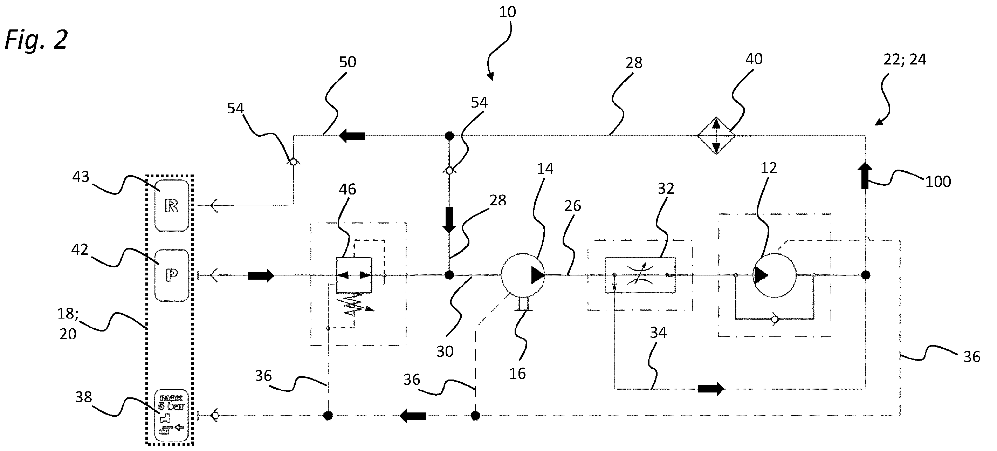

Figur 2 eine Ausführungsvariante einer Hydraulikanlage mit einer ersten Pumpe und einem Hydraulikantrieb, welche mittels eines Leitungssystem einen geschlossenen Zirkulationskreislauf bilden, welcher mit einer Ölversorgungsanlage einer Zugmaschine gekoppelt ist, wobei zur Definition einer Zuführmenge an Fluid ein Druckregelventil vorgesehen ist,

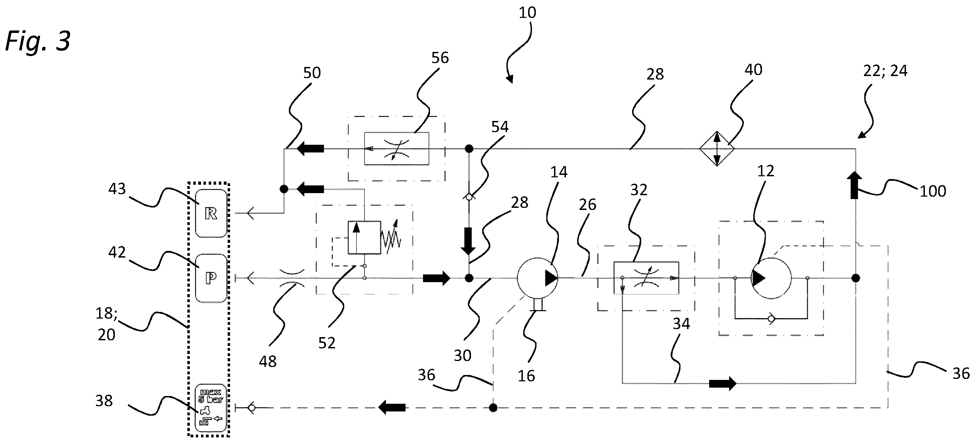

Figur 3 eine Ausführungsvariante einer Hydraulikanlage mit einer ersten Pumpe und einem Hydraulikantrieb, welche mittels eines Leitungssystem einen geschlossenen Zirkulationskreislauf bilden, welcher mit einer Ölversorgungsanlage einer Zugmaschine gekoppelt ist, wobei zur Definition einer Zuführmenge und einer Rückführmenge an Fluid ein Druckbegrenzungsventil und ein Stromregelventil vorgesehen sind,

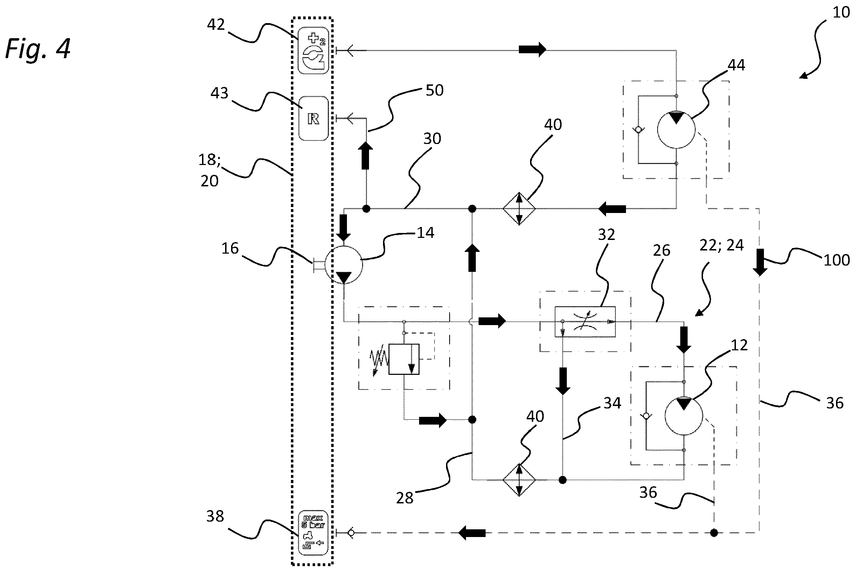

Figur 4 eine Ausführungsvariante einer Hydraulikanlage mit einer ersten Pumpe und einem Hydraulikantrieb, welche mittels eines Leitungssystem einen geschlossenen Zirkulationskreislauf bilden, welcher mit einer Ölversorgungsanlage einer Zugmaschine gekoppelt ist, wobei zur Definition einer Zuführmenge und einer Rückführmenge an Fluid ein Druckbegrenzungsventil und eine zweite Pumpe vorgesehen sind.

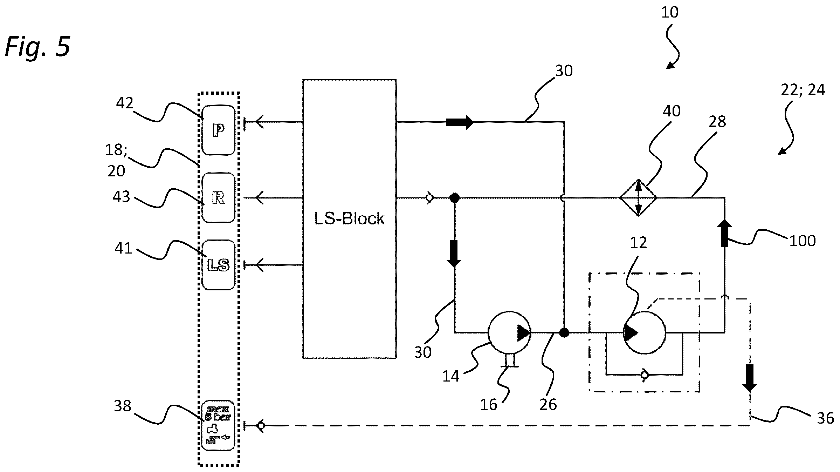

Figur 5 eine Ausführungsvariante einer Hydraulikanlage mit einer ersten Pumpe und einem Hydraulikantrieb, welche mittels eines Leitungssystem einen geschlossenen Zirkulationskreislauf bilden, welcher mit einem LS-Block (Load-Sensing-Block) einer Ölversorgungsanlage einer Zugmaschine gekoppelt ist, wobei eine Zuleitung zur Zuführung von Fluid mit der Verbindungsleitung gekoppelt ist.

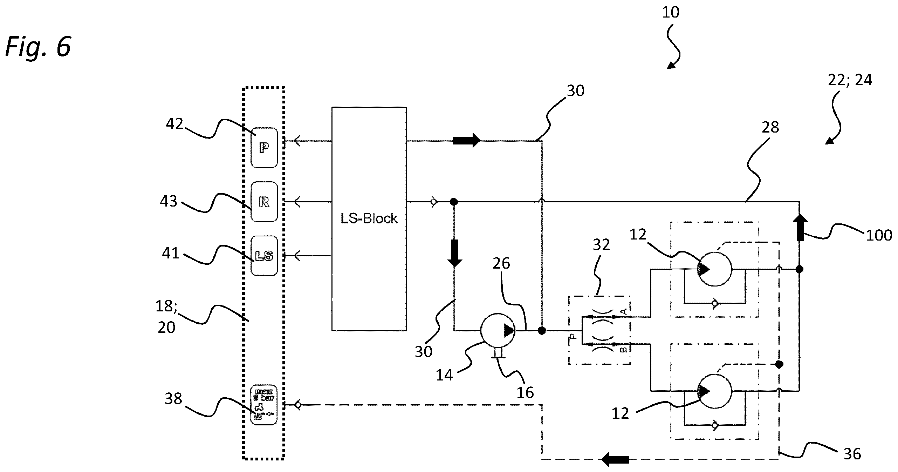

Figur 6 eine Ausführungsvariante einer Hydraulikanlage mit einer ersten Pumpe und zwei Hydraulikantrieben, welche mittels eines Leitungssystem einen geschlossenen Zirkulationskreislauf bilden, welcher mit einem LS-Block (Load-Sensing-Block) einer Ölversorgungsanlage einer Zugmaschine gekoppelt ist, wobei eine Zuleitung zur Zuführung von Fluid mit der Verbindungsleitung gekoppelt ist und wobei das erste Ventil durch einen Mengenteiler gebildet ist.

Die in den Figuren 1 bis 6 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Hydraulikanlage, ausgestaltet und ausgeführt sein kann und stellen keine abschließende Begrenzung dar.

In den Ausführungsvarianten der Hydraulikanlage der nachstehend erläuterten Ausführungsbeispiele sind die Durchflussrichtungen des Fluid in den jeweiligen Leitungen mittels Durchflusspfeile 100 in erläuternder Weise dargestellt.

Die Figuren 1 bis 6 zeigen unterschiedliche Ausführungsvarianten von Hydraulikanlagen 10 die unter gemeinsamer Bezugnahme auf die Figuren 1 bis 4 beschrieben werden.

Die Figuren 1 bis 6 zeigen jeweils eine Hydraulikanlage 10 für eine landwirtschaftliche Verteilmaschine (hier nicht dargestellt), insbesondere für eine pneumatische Sämaschine und/oder einen pneumatischen Düngerstreuer. Innerhalb der erfindungsgemäßen Verteilmaschine wird vorzugsweise granulares Verteilgut (z.B. Saatgut, Dünger oder dergl.) mittels eines Luftvolumenstrom gefördert und transportiert. Wobei zur Erzeugung des Luftvolumenstrom wenigstens ein Gebläse vorgesehen ist, welches mittels eines Hydraulikantrieb 12 (z.B. Hydraulikmotor) angetrieben wird. Wobei der Hydraulikantrieb 12 eingerichtet ist, das Gebläse in Abhängigkeit eines erhaltenen Volumenstrom eines Fluid (z.B. Hydrauliköl), mit einer steuer- und/oder regelbaren Drehzahl anzutreiben.

Die Hydraulikanlage 10 umfasst wenigstens eine erste Pumpe 14, welche eingerichtet ist, mittels einer Antriebswelle 16 einer Zugmaschine 18 antriebstechnisch gekoppelt und mittels dieses angetrieben zu werden. Die erste Pumpe 14 kann somit zweckmäßig eine Aufsteckpumpe sein und mit einem, die Antriebswelle bildenden Zapfwellenstummel der Zugmaschine 18 gekoppelt sein. Auch eine Koppelung mittels einer Gelenkwelle wäre denkbar.

Gemäß den Figuren sind von der Zugmaschine 18 jeweils stark vereinfacht nur die Ölversorgungsanlage 20 dargestellt. Die Zugmaschine 18 kann insbesondere ein Traktor sein.

Wie aus den Figuren 5 und 6 zudem hervorgeht, kann die Ölversorgungsanlage 20 zudem mit einem sog. LS-Block (Load-Sensing-Block) gekoppelt sein und/oder einen derartigen umfassen. Dementsprechend kann die erfindungsgemäße Hydraulikanlage 10 als Load-Sensing-System ausgeführt sein.

Die erste Pumpe 14 und der Hydraulikantrieb 12 bilden mittels eines Leitungssystem 22 einen geschlossenen Zirkulationskreislauf 24, wobei entlang des Zirkulationskreislauf mittels der ersten Pumpe 14 Fluid gefördert, das heißt zirkuliert wird. Das heißt, die erste Pumpe 14, der Hydraulikantrieb 12 und das Leitungssystem 22 sind in Reihe zueinander angeordnet und bilden insbesondere eine Ringleitung.

Das Leitungssystem 22 umfasst eine Verbindungsleitung 26 welche mit der ersten Pumpe 14 einerseits und mit dem Hydraulikantrieb 12 andererseits gekoppelt ist. Zudem umfasst das Leitungssystem 22 eine Rückleitung 28 welche mit dem Hydraulikantrieb 12 einerseits und mit einer Zuleitung 30 anderseits gekoppelt ist. Darüber hinaus umfasst das Leitungssystem 22 ein Zuleitung 30 welche mit der ersten Pumpe 14 gekoppelt ist.

Wie aus den Figuren hervorgeht umfasst eine Koppelung insbesondere eine wirktechnische, mittelbare oder unmittelbare Verbindung. Die Leitungen können zudem sowohl einteilig, das heißt einstückig, und/oder aus mehreren Einzelleitungen zusammengesetzt sein. Zudem könnten in deren Verlauf, Ventile, Schnittstellen oder dergl. angeordnet sein.

Dem Hydraulikantrieb 12 ist zum Steuern und/oder Regeln der Drehzahl ein erstes Ventil 32 vorgeordnet, insbesondere ist die Verbindungsleitung 26 entsprechend mehrgeteilt. Das erste Ventil 32 ist eingerichtet einen Volumenstrom eines Fluid zu beeinflussen.

Das erste Ventil 32 umfasst zudem eine Ventilleitung 34, welche mit dem ersten Ventil 32 einerseits und mit dem Leitungssystem 22, zweckmäßig der Rückleitung 28 gekoppelt ist. Gemäß der Ausführungsbeispiele der Figuren 1 bis 4 ist das erste Ventil 32 als Stromregelventil ausgeführt.

Gemäß dem Ausführungsbeispiel der Figur 6 ist das erste Ventil 32 als Mengenteiler ausgeführt, welchem zwei Hydraulikantriebe 12 nachgeordnet sind. Der Mengenteiler kann zweckmäßig eingerichtet sein um die Hydraulikantriebe 12 zumindest weitgehend identisch anzusteuern und/oder die Hydraulikantriebe 12 definiert unterschiedlich anzusteuern.

Alternativ wäre es auch denkbar, dass die erste Pumpe 14 eine Vestellpumpe mit einer veränderbaren Antriebsdrehzahl ist. Wobei wiederum anhand der Antriebsdrehzahl eine bereitgestellte Menge an Fluid welche einen Volumenstrom für den Hydraulikantrieb 12 definiert steuer- und/oder regelbar sein kann, wobei ein Steuern und/oder Regeln manuell und/oder elektro-proportional erfolgen kann.

Das Leitungssystem 22 umfasst zudem mehrere Niederdruckleitungen 36 welche mit der ersten Pumpe 14 und/oder mit dem Hydraulikantrieb 12 einerseits gekoppelt sind und eingerichtet sind, mit einem Drucklosanschluss 38 (z.B. Druckloser-Rücklauf) einer Ölversorgungsanlage 20 einer Zugmaschine 18 gekoppelt zu werden.

Zur Kühlung des Fluid kann dem Leitungssystem 22 ein Kühler 40 zugeordnet sein, welcher zur Kühlung des Fluid eingerichtet ist. Insbesondere kann der Rückleitung 28 ein Kühler 40 zugeordnet sein und/oder der Zuleitung 30 ein Kühler 40 zugeordnet sein.

Die Zuleitung 30 ist zudem eingerichtet, um mit einer Ölversorgungsanlage 20 einer Zugmaschine 18 gekoppelt zu werden, vorzugsweise mit einem Versorgungsanschluss 42 der Ölversorgungsanlage 20 gekoppelt zu werden. Der Versorgungsanschluss 42, kann bspw. ein sog. Power Beyond Anschluss sein (z.B. gekoppelt mit einem LS-Block) und/oder ein Anschluss eines Steuergeräts der Zugmaschine sein. Gemäß der Figur 4 kann der Zuleitung 30 zudem eine zusätzliche zweite Pumpe 44 zugeordnet sein.

Das Leitungssystem 22 umfasst zudem ein Koppelleitung 50, welche mittels einer Abzweigung mit der Rückleitung 28 (und/oder der Zuleitung 30 - vergl. Figur 4) einerseits gekoppelt ist und welche eingerichtet ist, mit einer Ölversorgungsanlage 20 einer Zugmaschine 18 andererseits gekoppelt zu werden, vorzugsweise mit einem Rücklaufanschluss 43 der Ölversorgungsanlage 20 gekoppelt zu werden. Der Rücklaufanschluss 43, kann bspw. ein sog. Power Beyond Anschluss sein und/oder ein Anschluss eins Steuergeräts der Zugmaschine sein und/oder ein LS-Block sein.

Mittels der Zuleitung 30 kann eine definierte und/oder definierbare Zuführmenge an Fluid dem Zirkulationskreislauf 24 zugeführt werden. Insbesondere eine Teilmenge an Fluid der Gesamtmenge des im Zirkulationskreislauf 24 zirkulierenden Fluid zugeführt werden, wobei die Teilmenge vorzugsweise geringer ist als die Gesamtmenge des im Zirkulationskreislauf 24 zirkulierenden Fluid.

Zur Definition der Zuführmenge ist es gemäß der Figur 2 möglich, dass der Zuleitung 30 ein Druckregelventil 46 zugeordnet ist.

Gemäß der Figuren 5 und 6 kann die Zuleitung auch mit der Verbindungsleitung gekoppelt sein. Das heißt, dass der Zirkulationskreislauf 24, vorzugsweise die Verbindungsleitung 26 mit einer Zuleitung 30 und/oder mit einer Koppelleitung 50 gekoppelt ist, wobei mittels der Zuleitung 30 eine definierte und/oder definierbare Zuführmenge an Fluid dem Zirkulationskreislauf 24 zuführbar ist, und/oder mittels der Koppelleitung 50 eine definierte und/oder definierbare Rückführmenge an Fluid aus dem Zirkulationskreislauf 24 abführbar ist.

Somit ist es zweckmäßig auch möglich, dass mit der ersten Pumpe 14 eine im Wesentlichen dauerhaft konstante Antriebsleistung des Hydraulikantrieb 12 (oder der mehreren Hydraulikantriebe 12) erreicht wird und bei einer Erhöhung der Antriebsleistung des Hydraulikantrieb 12 eine zugeführte Menge an Fluid erhöht wird. Wobei dies bspw. auch mit einem Load-Sensing-System (z.B. gebildet durch einen LS-Block) erreicht werden kann, bzw. erfolgen kann.

Alternativ oder ergänzend ist es möglich, dass zur Definition der Zuführmenge, der Zuleitung 30 gemäß der Figur 3 eine Blende 48 zugeordnet ist sowie mit der Zuleitung 30 und einer Koppelleitung 50 ein zweites Ventil 52 gekoppelt ist, welches zweite Ventil 52 bspw. Druckbegrenzungsventil (vergl. Figur 3), ein Druckregelventil und/oder ein Stromregelventil ist.

Alternativ oder ergänzend ist es möglich, dass zur Definition der Zuführmenge gemäß der Figur 4, der Zuleitung 30 eine zweite Pumpe 44 zugeordnet ist.

Mittels der Koppelleitung 50 ist eine definierte und/oder definierbare Rückführmenge an Fluid aus dem Zirkulationskreislauf 24 abführbar, insbesondere eine Teilmenge an Fluid der Gesamtmenge des im Zirkulationskreislauf 24 zirkulierenden Fluid abführbar. Wobei die Teilmenge vorzugsweise geringer ist als die Gesamtmenge des im Zirkulationskreislauf 24 zirkulierenden Fluid.

Zur Definition der Rückführmenge ist es gemäß der Figur 1 möglich, dass der Koppelleitung 50 und/oder der Rückleitung 28 ein Rückschlagventil 54 zugeordnet ist, welche zweckmäßig mit unterschiedlichen Drücken voreingestellt und/oder voreinstellbar sind, insbesondere derartig, das eine Teilmenge aus dem Zirkulationskreislauf 24 abführbar ist und eine Restmenge im Zirkulationskreislauf 24 verbleibt, wobei die Restmenge größer ist als die Teilmenge.

Alternativ oder ergänzend ist es möglich, dass zur Definition der Rückführmenge gemäß der Figur 2, der Koppelleitung 50 ein drittes Ventil 56 zugeordnet ist, wobei das dritte Ventil 56 bspw. ein Stromregelventil (vergl. Figur 2) ist und/oder eine Blende ist und/oder eine Drossel ist.

Mittels der Zuleitung 30 ist eine definierte und/oder definierbare Zuführmenge an Fluid dem Zirkulationskreislauf 24 zuführbar, und mittels der Koppelleitung 50 eine definierte und/oder definierbare Rückführmenge an Fluid aus dem Zirkulationskreislauf 24 abführbar, wobei die Zuführmenge (z.B. 50Liter/min) und die Rückführmenge (z.B. 50Liter/min) zumindest weitgehend gleich sind und/oder geringer sind als eine Gesamtmenge (z.B. 150 Liter) des im Zirkulationskreislauf 24 zirkulierenden Fluid.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | | |
|---|---|---|---|
| 10 | Hydraulikanlage | 38 | Drucklosanschluss |
| 12 | Hydraulikantrieb | 40 | Kühler |
| 14 | erste Pumpe | 41 | LS-Anschluss |
| 16 | Antriebswelle | 42 | Versorgungsanschluss |
| 18 | Zugmaschine | 43 | Rücklaufanschluss |
| 20 | Ölversorgungsanlage | 44 | zweite Pumpe |
| 22 | Leitungssystem | 46 | Druckregelventil |
| 24 | Zirkulationskreislauf | 48 | Blende |
| 26 | Verbindungsleitung | 50 | Koppelleitung |
| 28 | Rückleitung | 52 | zweites Ventil |
| 30 | Zuleitung | 54 | Rückschlagventil |
| 32 | erstes Ventil | 56 | drittes Ventil |
| 34 | Ventilleitung | | |
| 36 | Niederdruckleitung | 100 | Durchflusspfeil |

## Patentansprüche

1. Hydraulikanlage (10) für eine landwirtschaftliche Verteilmaschine, insbesondere pneumatische Sämaschine und/oder pneumatischer Düngerstreuer, umfassend wenigstens:
- eine erste Pumpe (14), welche eingerichtet ist, mittels einer Antriebswelle (16) einer Zugmaschine (18) antriebstechnisch gekoppelt und mittels dieser angetrieben zu werden,
- einen Hydraulikantrieb (12), welcher eingerichtet ist, ein Gebläse in Abhängigkeit eines erhaltenen Volumenstrom eines Fluid, mit einer steuer- und/oder regelbaren Drehzahl anzutreiben, wobei
- die erste Pumpe (14) und der Hydraulikantrieb (12) mittels eines Leitungssystem (22) einen, vorzugsweise geschlossenen, Zirkulationskreislauf (24) bilden, und die erste Pumpe (14) eingerichtet ist, dass Fluid entlang des Zirkulationskreislauf (24) zu fördern,
**dadurch gekennzeichnet, dass**
das Leitungssystem (22) eine Zuleitung (30) aufweist,
- welche mit der ersten Pumpe (14) einerseits gekoppelt ist und
- welche eingerichtet ist, mit einer Ölversorgungsanlage (20) einer Zugmaschine (18) andererseits gekoppelt zu werden, vorzugsweise mit einem Versorgungsanschluss (42) der Ölversorgungsanlage (20) einer Zugmaschine (18) gekoppelt zu werden, wobei mittels der Zuleitung (30) eine definierte und/oder definierbare Zuführmenge an Fluid dem Zirkulationskreislauf (24) zuführbar ist, und wobei
zur Definition der Zuführmenge,
- der Zuleitung (30) ein Druckregelventil (46) zugeordnet ist, und/oder
- der Zuleitung (30) eine Blende (48) zugeordnet ist sowie mit der Zuleitung (30) und einer Koppelleitung (50) ein zweites Ventil (52) gekoppelt ist, wobei das zweite Ventil (52) ein Druckbegrenzungsventil, ein Druckregelventil und/oder ein Stromregelventil ist und/oder
- der Zuleitung (30) eine zweite Pumpe (44) zugeordnet ist.

2. Hydraulikanlage (10) nach Anspruch 1, **dadurch gekennzeichnet, dass** im Zirkulationskreislauf (24) eine definierte und/oder definierbare Menge an Fluid durch Fördern mittels der ersten Pumpe (14) zirkuliert, vorzugsweise dauerhaft zirkuliert.

3. Hydraulikanlage (10) nach einem der vorherigen Ansprüche, **dadurch gekennzeichnet, dass** das Leitungssystem (22) wenigstens gebildet wird durch,
- eine Verbindungsleitung (26), welche mit der ersten Pumpe (14) einerseits und mit dem Hydraulikantrieb (12) andererseits gekoppelt ist und/oder
- eine Rückleitung (28), welchem mit dem Hydraulikantrieb (12) einerseits und mit der ersten (14) Pumpe und/oder einer Zuleitung (30) andererseits gekoppelt ist und/oder
- eine Zuleitung (30), welche zumindest mit der ersten Pumpe (14) gekoppelt ist.

4. Hydraulikanlage (10), nach einem der vorhergigen Ansprüche, **dadurch gekennzeichnet, dass**
- der Zirkulationskreislauf (24) mit einer Zuleitung (30) und/oder mit einer Koppelleitung (50) gekoppelt ist, wobei
- mittels der Zuleitung (30) eine definierte und/oder definierbare Zuführmenge an Fluid dem Zirkulationskreislauf (24) zuführbar ist, und/oder
- mittels der Koppelleitung (50) eine definierte und/oder definierbare Rückführmenge an Fluid aus dem Zirkulationskreislauf (24) abführbar ist.

5. Hydraulikanlage (10) nach Anspruch 4, **dadurch gekennzeichnet, dass**
- die Zuführmenge und die Rückführmenge zumindest weitgehend gleich sind
- und/oder die Zuführmenge und/oder die Rückführmenge jeweils geringer sind als eine Gesamtmenge des im Zirkulationskreislauf (24) zirkulierenden Fluid.

6. Hydraulikanlage (10), nach einem der vorherigen Ansprüche, **dadurch gekennzeichnet, dass** mittels der Zuleitung (30) die definierte und/oder definierbare Zuführmenge an Fluid dem Zirkulationskreislauf (24) zuführbar ist,
- nämlich eine Teilmenge an Fluid der Gesamtmenge des im Zirkulationskreislauf (24) zirkulierenden Fluid zuführbar ist,
- wobei die Teilmenge vorzugsweise geringer ist als die Gesamtmenge des im Zirkulationskreislauf (24) zirkulierenden Fluid.

7. Hydraulikanlage (10) nach einem der vorherigen Ansprüche, **dadurch gekennzeichnet, dass** das Leitungssystem (22) eine Koppelleitung (50) aufweist,
- welche mittels einer Abzweigung mit der Rückleitung (28) einerseits gekoppelt ist und
- welche eingerichtet ist, mit einer Ölversorgungsanlage (20) einer Zugmaschine (18) andererseits gekoppelt zu werden, vorzugsweise mit einem Rücklaufanschluss (43) der Ölversorgungsanlage (20) einer Zugmaschine (18) gekoppelt zu werden.

8. Hydraulikanlage (10), nach Anspruch 7, **dadurch gekennzeichnet, dass**
- mittels der Koppelleitung (50) eine definierte und/oder definierbare Rückführmenge an Fluid aus dem Zirkulationskreislauf (24) abführbar ist,
- insbesondere eine Teilmenge an Fluid der Gesamtmenge des im Zirkulationskreislauf (24) vorhandenen Fluid abführbar ist,
- wobei die Teilmenge vorzugsweise geringer ist als die Gesamtmenge des im Zirkulationskreislauf (24) zirkulierenden Fluid.

9. Hydraulikanlage (10), nach einem der vorherigen Ansprüche, **dadurch gekennzeichnet, dass** zur Definition der Rückführmenge
- der Koppelleitung (50) und/oder der Rückleitung (28) ein Rückschlagventil (54) zugeordnet ist, und/oder
- der Koppelleitung (50) ein drittes Ventil (56) zugeordnet ist.

10. Hydraulikanlage (10) nach Anspruch 9, **dadurch gekennzeichnet, dass**
- die Rückschlagventile mit unterschiedlichen Drücken voreingestellt und/oder voreinstellbar sind und/oder
- das dritte Ventil (56) ein Stromregelventil und/oder eine Blende und/oder eine Drossel ist.

11. Hydraulikanlage (10), nach einem der vorherigen Ansprüche, **dadurch gekennzeichnet, dass** das Leitungssystem (22) eine Verbindungsleitung (26) aufweist,
- welche mit der ersten Pumpe (14) einerseits und mit dem Hydraulikantrieb (12) andererseits gekoppelt ist, wobei
- die Verbindungsleitung (26) mehrgeteilt ist und
- dieser ein, einen Volumenstrom beeinflussendes, erstes Ventil (32) zugeordnet ist, wobei das erste Ventil (14) eingerichtet ist,
- eine mittels der Verbindungsleitung (26) bereitgestellte Menge an Fluid zu steuern- und/oder zu regeln, wobei ein Steuern und/oder Regeln manuell und/oder elektro-proportional erfolgen kann.

12. Hydraulikanlage (10) nach Anspruch 11, **dadurch gekennzeichnet**, das dem ersten Ventil eine Ventilleitung zugeordnet ist, welche mit dem ersten Ventil (32) einerseits und mit dem Leitungssystem (22), insbesondere der Rückleitung (28), andererseits gekoppelt ist.

13. Hydraulikanlage (10) nach Anspruch 12, **dadurch gekennzeichnet, dass** das erste Ventil (32) ein Stromregelventil ist.

14. Hydraulikanlage (10) nach einem der vorherigen Ansprüche, **dadurch gekennzeichnet, dass** das Leitungssystem (22) eine Verbindungsleitung (26) aufweist,
- welche mit der ersten Pumpe (14) einerseits und mit dem Hydraulikantrieb (12) andererseits gekoppelt ist, wobei
- die erste Pumpe (14) eine Verstellpumpe mit einer veränderbaren Antriebsdrehzahl ist, welche eingerichtet ist, Anhand einer Antriebsdrehzahl eine bereitgestellte Menge an Fluid zu definieren und somit einen Volumenstrom für den Hydraulikantrieb (12) zu steuern- und/oder zu regeln, wobei ein Steuern und/oder Regeln manuell und/oder elektro-proportional erfolgen kann.

15. Hydraulikanlage (10) nach einem der vorherigen Ansprüche, **dadurch gekennzeichnet, dass** das Leitungssystem (22) zumindest eine Niederdruckleitung (36) umfasst,
- welche mit der ersten Pumpe (14) und/oder mit dem Hydraulikantrieb (12) einerseits gekoppelt ist und eingerichtet ist,
- mit einem Drucklosanschluss (38) einer Ölversorgungsanlage (20) einer Zugmaschine (18) gekoppelt zu werden.

16. Hydraulikanlage (10) nach einem der vorherigen Ansprüche, **dadurch gekennzeichnet, dass** dem Leitungssystem (22) ein Kühler (40) zugeordnet ist, welche zur Kühlung des Fluid eingerichtet ist.

17. Hydraulikanlage (10) nach einem der vorherigen Ansprüche, **dadurch gekennzeichnet, dass**
- der Zirkulationskreislauf (24), vorzugsweise die Verbindungsleitung (26) mit einer Zuleitung (30) und/oder mit einer Koppelleitung (50) gekoppelt ist, wobei
- mittels der Zuleitung (30) die definierte und/oder definierbare Zuführmenge an Fluid dem Zirkulationskreislauf (24) zuführbar ist, und/oder
- mittels der Koppelleitung (50) eine definierte und/oder definierbare Rückführmenge an Fluid aus dem Zirkulationskreislauf (24) abführbar ist.

18. Hydraulikanlage (10) nach einem der vorherigen Ansprüche, **dadurch gekennzeichnet, dass** das erste Ventil (32) eingerichtet ist, eine Menge an Fluid auf zwei Hydraulikantriebe (12) aufzuteilen, vorzugsweise zumindest weitgehend identisch aufzuteilen und/oder definiert unterschiedlich aufzuteilen.

## Claims

1. Hydraulic system (10) for an agricultural distribution machine, in particular pneumatic seeder and/or pneumatic fertilizer spreader, comprising at least:
- a first pump (14), which is designed to be coupled in terms of drive to a towing machine (18) by means of a drive shaft (16) and to be driven by means of the latter,
- a hydraulic drive (12), which is designed to drive a blower at a controllable and/or regulable rotational speed depending on an obtained volume flow of a fluid, wherein
- the first pump (14) and the hydraulic drive (12) form a, preferably closed, circulation circuit (24) by means of a line system (22), and the first pump (14) is designed to convey fluid along the circulation circuit (24),
**characterized in that**
the line system (22) has a supply line (30),
- which is coupled, on the one hand, to the first pump (14) and
- which is designed to be coupled, on the other hand, to an oil supply system (20) of a towing machine (18), preferably to be coupled to a supply port (42) of the oil supply system (20) of a towing machine (18), wherein a defined and/or definable supply quantity of fluid can be supplied to the circulation circuit (24) by means of the supply line (30), and wherein
to define the supply quantity
- a pressure-regulating valve (46) is assigned to the supply line (30), and/or
- an orifice (48) is assigned to the supply line (30), and a second valve (52) is coupled to the supply line (30) and to a coupling line (50), the second valve (52) being a pressure-limiting valve, a pressure-regulating valve and/or a flow-regulating valve, and/or
- a second pump (44) is assigned to the supply line (30).

2. Hydraulic system (10) according to Claim 1, **characterized in that** a defined and/or definable quantity of fluid circulates, preferably continuously circulates, in the circulation circuit (24) by being conveyed by means of the first pump (14).

3. Hydraulic system (10) according to either of the preceding claims, **characterized in that** the line system (22) is at least formed by
- a connecting line (26), which is coupled to the first pump (14), on the one hand, and to the hydraulic drive (12), on the other hand, and/or
- a return line (28), which is coupled to the hydraulic drive (12), on the one hand, and to the first (14) pump and/or to a supply line (30), on the other hand, and/or
- a supply line (30), which is coupled at least to the first pump (14).

4. Hydraulic system (10) according to any one of the preceding claims, **characterized in that**
- the circulation circuit (24) is coupled to a supply line (30) and/or to a coupling line (50), wherein
- a defined and/or definable supply quantity of fluid can be supplied to the circulation circuit (24) by means of the supply line (30), and/or
- a defined and/or definable return quantity of fluid can be discharged from the circulation circuit (24) by means of the coupling line (50).

5. Hydraulic system (10) according to Claim 4, **characterized in that**
- the supply quantity and the return quantity are at least substantially identical,
- and/or the supply quantity and/or the return quantity are each less than an overall quantity of the fluid circulating in the circulation circuit (24).

6. Hydraulic system (10) according to any one of the preceding claims, **characterized in that** the defined and/or definable supply quantity of fluid can be supplied to the circulation circuit (24) by means of the supply line (30),
- specifically, a partial quantity of fluid of the overall quantity of fluid circulating in the circulation circuit (24) can be supplied,
- wherein the partial quantity is preferably less than the overall quantity of the fluid circulating in the circulation circuit (24).

7. Hydraulic system (10) according to any one of the preceding claims, **characterized in that** the line system (22) has a coupling line (50),
- which is coupled, on the one hand, to the return line (28) by means of a branch line, and
- which is designed to be coupled, on the other hand, to an oil supply system (20) of a towing machine (18), preferably to be coupled to a return port (43) of the oil supply system (20) of a towing machine (18).

8. Hydraulic system (10) according to Claim 7, **characterized in that**
- a defined and/or definable return quantity of fluid can be discharged from the circulation circuit (24) by means of the coupling line (50),
- in particular, a partial quantity of fluid of the overall quantity of fluid present in the circulation circuit (24) can be discharged,
- wherein the partial quantity is preferably less than the overall quantity of the fluid circulating in the circulation circuit (24).

9. Hydraulic system (10) according to any one of the preceding claims, **characterized in that** to define the return quantity
- a nonreturn valve (54) is assigned to the coupling line (50) and/or to the return line (28), and/or
- a third valve (56) is assigned to the coupling line (50).

10. Hydraulic system (10) according to Claim 9, **characterized in that**
- the nonreturn valves are preset and/or presettable at different pressures, and/or
- the third valve (56) is a flow-regulating valve and/or an orifice and/or a throttle.

11. Hydraulic system (10) according to any one of the preceding claims, **characterized in that** the line system (22) has a connecting line (26),
- which is coupled to the first pump (14), on the one hand, and to the hydraulic drive (12), on the other hand, wherein
- the connecting line (26) is divided into multiple parts and
- said connecting line is assigned a first valve (32), which affects a volume flow, the first valve (14) being designed
- to control and/or regulate a quantity of fluid provided by means of the connecting line (26), wherein control and/or regulation can be undertaken manually and/or electro-proportionally.

12. Hydraulic system (10) according to Claim 11, **characterized in that** the first valve is assigned a valve line, which is coupled, on the one hand, to the first valve (32) and, on the other hand, to the line system (22), in particular to the return line (28).

13. Hydraulic system (10) according to Claim 12, **characterized in that** the first valve (32) is a flow-regulating valve.

14. Hydraulic system (10) according to any one of the preceding claims, **characterized in that** the line system (22) has a connecting line (26),
- which is coupled to the first pump (14), on the one hand, and to the hydraulic drive (12), on the other hand, wherein
- the first pump (14) is a variable displacement pump with a variable driving speed and is designed to define a provided quantity of fluid on the basis of a driving speed and thus to control and/or regulate a volume flow for the hydraulic drive (12), wherein control and/or regulation can be undertaken manually and/or electro-proportionally.

15. Hydraulic system (10) according to any one of the preceding claims, **characterized in that** the line system (22) comprises at least one low-pressure line (36),
- which is coupled, on the one hand, to the first pump (14) and/or to the hydraulic drive (12) and is designed
- to be coupled to a pressure-free port (38) of an oil supply system (20) of a towing machine (18).

16. Hydraulic system (10) according to any one of the preceding claims, **characterized in that** the line system (22) is assigned a cooler (40), which is designed for cooling the fluid.

17. Hydraulic system (10) according to any one of the preceding claims, **characterized in that**
- the circulation circuit (24), preferably the connecting line (26), is coupled to a supply line (30) and/or to a coupling line (50), wherein
- by means of the supply line (30), the defined and/or definable supply quantity of fluid can be supplied to the circulation circuit (24), and/or
- a defined and/or definable return quantity of fluid can be discharged from the circulation circuit (24) by means of the coupling line (50).

18. Hydraulic system (10) according to any one of the preceding claims, **characterized in that** the first valve (32) is designed to divide a quantity of fluid between two hydraulic drives (12), preferably to divide same at least substantially identically and/or to divide same differently in a defined way.

## Revendications

1. Installation hydraulique (10) pour une machine de distribution agricole, en particulier un semoir pneumatique et/ou un épandeur pneumatique d'engrais, comprenant au moins :
- une première pompe (14), qui est mise au point pour être accouplée par une technique d'entraînement au moyen d'un arbre d'entraînement (16) d'une machine de traction (18) et pour être entraînée au moyen de celui-ci,
- un entraînement hydraulique (12), qui est mis au point pour entraîner une soufflante à une vitesse de rotation commandable et/ou réglable en fonction d'un débit volumique d'un fluide obtenu,
- la première pompe (14) et l'entraînement hydraulique (12) formant un circuit de circulation (24) de préférence fermé au moyen d'un système de conduites (22), et la première pompe (14) étant mise au point pour refouler du fluide le long du circuit de circulation (24),
**caractérisée en ce que**
le système de conduites (22) comporte une conduite d'arrivée (30),
- qui est accouplée d'une part à la première pompe (14) et
- qui est mise au point pour être accouplée d'autre part à une installation d'alimentation en huile (20) d'une machine de traction (18), de préférence pour être accouplée à un raccord d'alimentation (42) de l'installation d'alimentation en huile (20) d'une machine de traction (18), une quantité de fluide d'amenée définie et/ou pouvant être définie pouvant être amenée au circuit de circulation (24) au moyen de la conduite d'arrivée(30), et
pour définir la quantité d'arrivée,
- une soupape de régulation de pression (46) étant associée à la conduite d'arrivée (30), et/ou
- un diaphragme (48) étant associé à la conduite d'arrivée (30) et une deuxième soupape (52) étant accouplée à la conduite d'arrivée (30) et à une conduite d'accouplement (50), la deuxième soupape (52) étant une soupape de limitation de pression, une soupape de régulation de pression et/ou une soupape de régulation de débit et/ou
- une deuxième pompe (44) étant associée à la conduite d'arrivée (30).

2. Installation hydraulique (10) selon la revendication 1, **caractérisée en ce qu'**une quantité de fluide définie et/ou pouvant être définie de fluide circule, de préférence circule de manière permanente, dans le circuit de circulation (24) par refoulement au moyen de la première pompe (14).

3. Installation hydraulique (10) selon l'une des revendications précédentes, **caractérisée en ce que** le système de conduites (22) est formé au moins par
- une conduite de liaison (26), qui est accouplée d'une part à la première pompe (14) et d'autre part à l'entraînement hydraulique (12) et/ou
- une conduite de retour (28), qui est accouplée d'une part à l'entraînement hydraulique (12) et d'autre part à la première pompe (14) et/ou à une conduite d'arrivée (30) et/ou
- une conduite d'arrivée (30), qui est accouplée au moins à la première pompe (14).

4. Installation hydraulique (10) selon l'une des revendications précédentes, **caractérisée en ce que**
- le circuit de circulation (24) est accouplé à une conduite d'arrivée (30) et/ou à une conduite d'accouplement (50),
- une quantité d'amenée de fluide définie et/ou pouvant être définie pouvant être amenée au circuit de circulation (24) au moyen de la conduite d'arrivée (30), et/ou
- une quantité de retour de fluide définie et/ou pouvant être définie pouvant être évacuée du circuit de circulation (24) au moyen de la conduite d'accouplement (50).

5. Installation hydraulique (10) selon la revendication 4, **caractérisée en ce que**
- la quantité d'amenée et la quantité de retour sont au moins largement identiques
- et/ou la quantité d'amenée et/ou la quantité de retour sont chacune inférieures à une quantité totale du fluide circulant dans le circuit de circulation (24).

6. Installation hydraulique (10) selon l'une des revendications précédentes, **caractérisée en ce que** la quantité d'amenée de fluide définie et/ou pouvant être définie peut être amenée au circuit de circulation (24) au moyen de la conduite d'arrivée (30),
- à savoir une quantité partielle de fluide peut être amenée à la quantité totale du fluide circulant dans le circuit de circulation (24),
- la quantité partielle étant de préférence inférieure à la quantité totale du fluide circulant dans le circuit de circulation (24).

7. Installation hydraulique (10) selon l'une des revendications précédentes, **caractérisée en ce que** le système de conduites (22) comporte une conduite d'accouplement (50),
- qui est accouplée d'une part à la conduite de retour (28) au moyen d'une dérivation et
- qui est mise au point pour être accouplée d'autre part à une installation d'alimentation en huile (20) d'une machine de traction (18), de préférence pour être accouplée à un raccord de retour (43) de l'installation d'alimentation en huile (20) d'une machine de traction (18).

8. Installation hydraulique (10) selon la revendication 7, **caractérisée en ce que**
- une quantité de retour de fluide définie et/ou pouvant être définie peut être évacuée du circuit de circulation (24) au moyen de la conduite d'accouplement (50),
- en particulier une quantité partielle de fluide peut être évacuée de la quantité totale du fluide présent dans le circuit de circulation (24),
- la quantité partielle étant de préférence inférieure à la quantité totale du fluide circulant dans le circuit de circulation (24).

9. Installation hydraulique (10) selon l'une des revendications précédentes, **caractérisée en ce que** pour définir la quantité de retour
- une soupape antiretour (54) est associée à la conduite d'accouplement (50) et/ou à la conduite de retour (28), et/ou
- une troisième soupape (56) est associée à la conduite d'accouplement (50).

10. Installation hydraulique (10) selon la revendication 9, **caractérisée en ce que**
- les soupapes antiretour sont préréglées et/ou peuvent être préréglées à différentes pressions et/ou
- la troisième soupape (56) est une soupape de régulation de débit et/ou un diaphragme et/ou un étranglement.

11. Installation hydraulique (10) selon l'une des revendications précédentes, **caractérisée en ce que** le système de conduites (22) comporte une conduite de liaison (26),
- qui est accouplée d'une part à la première pompe (14) et d'autre part à l'entraînement hydraulique (12),
- la conduite de liaison (26) étant multidivisée et
- une première soupape (32) influençant un débit volumique étant associée à celle-ci, la première soupape (14) étant configurée
- pour commander et/ou réguler une quantité de fluide fournie au moyen de la conduite de liaison (26), une commande et/ou une régulation pouvant être effectuées manuellement et/ou de manière électroproportionnelle.

12. Installation hydraulique (10) selon la revendication 11, **caractérisée en ce qu'**est associée à la première soupape une conduite de soupape qui est accouplée d'une part à la première soupape (32) et d'autre part au système de conduites (22), en particulier à la conduite de retour (28).

13. Installation hydraulique (10) selon la revendication 12, **caractérisée en ce que** la première soupape (32) est une soupape de régulation de débit.

14. Installation hydraulique (10) selon l'une des revendications précédentes, **caractérisée en ce que** le système de conduites (22) comporte une conduite de liaison (26),
- qui est accouplée d'une part à la première pompe (14) et d'autre part à l'entraînement hydraulique (12),
- la première pompe (14) étant une pompe à cylindrée variable avec une vitesse de rotation d'entraînement variable, qui est mise au point pour définir une quantité de fluide fournie à l'aide d'une vitesse de rotation d'entraînement et pour commander et/ou réguler ainsi un débit volumique pour l'entraînement hydraulique (12), une commande et/ou une régulation pouvant être effectuées manuellement et/ou de manière électroproportionnelle.

15. Installation hydraulique (10) selon l'une des revendications précédentes, **caractérisée en ce que** le système de conduites (22) comprend au moins une conduite basse pression (36),
- qui est accouplée d'une part à la première pompe (14) et/ou à l'entraînement hydraulique (12) et est mise au point
- pour être accouplée à un raccord sans pression (38) d'une installation d'alimentation en huile (20) d'une machine de traction (18).

16. Installation hydraulique (10) selon l'une des revendications précédentes, **caractérisée en ce qu'**un refroidisseur (40) est associé au système de conduites (22), qui est configuré pour refroidir le fluide.

17. Installation hydraulique (10) selon l'une des revendications précédentes, **caractérisée en ce que**
- le circuit de circulation (24), de préférence la conduite de liaison (26), est accouplé(e) à une conduite d'arrivée (30) et/ou à une conduite d'accouplement (50),
- la quantité d'amenée de fluide définie et/ou pouvant être définie pouvant être amenée au circuit de circulation (24) au moyen de la conduite d'arrivée (30), et/ou
- une quantité de retour de fluide définie et/ou pouvant être définie pouvant être évacuée du circuit de circulation (24) au moyen de la conduite d'accouplement (50).

18. Installation hydraulique (10) selon l'une des revendications précédentes, **caractérisée en ce que** la première soupape (32) est mise au point pour répartir une quantité de fluide sur deux entraînements hydrauliques (12), de préférence pour la répartir au moins largement de manière identique et/ou pour la répartir différemment de manière définie.
